# EUROPÄISCHE PATENTANMELDUNG

(11) **EP 4 020 615 A1**
(43) Veröffentlichungstag der Anmeldung: **29.06.2022**
(21) Anmeldenummer: 21214311.9
(22) Anmeldetag: 14.12.2021
(51) Int. Cl.: H01M 4/04, H01M 4/139, H01M 4/62

(54) **VERFAHREN ZUR HERSTELLUNG EINER ELEKTRODENPULVERMISCHUNG EINER BATTERIEZELLE**

(30) Priorität: 23.12.2020 DE 102020216546
(71) Anmelder: VOLKSWAGEN AG, 38440 Wolfsburg (DE)
(72) Erfinder: SCHOPF, Sven, 38116 Braunschweig (DE); TUNAS CANTORNA, Alba, 38118 Braunschweig (DE); WESTPHAL, Bastian, 38173 Sickte (DE); MEITZ, Malte, 31134 Hildesheim (DE)
(74) Vertreter: FDST Patentanwälte

(57) **Zusammenfassung**

Die Erfindung betrifft ein Verfahren (32) zur Herstellung einer Elektrodenpulvermischung (28) einer Batteriezelle (14). In einen Einfüllbereich (40) einer Maschine (42), die eine angetriebene, sich in einer Längsrichtung (44) erstreckende Schnecke (48) zur Durchmischung und Förderung eines Pulvers in der Längsrichtung (44) aufweist, werden ein Aktivmaterial (34), ein Binder (36) und ein Leitadditiv (38) eingefüllt. Mittels der Schnecke (48) werden der Binder (36), das Aktivmaterial (34) und das Leitadditiv (38) zu einem ersten Pulver (66) vermischt, und mittels der Schnecke (48) wird aus dem ersten Pulver (66) ein zweites Pulver (68) erstellt, indem der Binder (36) fibrilliert wird. Mittels der Schnecke (48) wird aus dem zweiten Pulver (68) die Elektrodenpulvermischung (28) erstellt, indem der fibrillierte Binder (38) zerkleinert wird, und die Elektrodenpulvermischung (28) wird an einer Entnahmeöffnung (58) aus der Maschine (42) entnommen, wobei die Entnahmeöffnung (58) in Längsrichtung (44) zu dem Einfüllbereich (40) beabstandet ist. Die Erfindung betrifft ferner die Verwendung einer Maschine (42) und ein Verfahren (30) zur Herstellung einer Elektrode (16) einer Batteriezelle (14).

## Beschreibung

Die Erfindung betrifft ein Verfahren zur Herstellung einer Elektrodenpulvermischung einer Batteriezelle, das auch als Elektroden-Blend bezeichnet wird. Die Erfindung betrifft ferner ein Verfahren zur Herstellung einer Elektrode einer Batteriezelle. Die Batteriezelle ist vorzugsweise ein Bestandteil eines Kraftfahrzeugs. Auch betrifft die Erfindung eine Verwendung einer Maschine, die eine angetriebene, sich in einer Längsrichtung erstreckende Schnecke zur Durchmischung und Förderung eines Pulvers in Längsrichtung aufweist.

In zunehmendem Maße werden Kraftfahrzeuge zumindest teilweise mittels eines Elektromotors angetrieben, sodass diese als Elektrofahrzeug oder Hybridfahrzeug ausgestaltet sind. Zur Bestromung des Elektromotors wird üblicherweise eine Hochvoltbatterie herangezogen, die mehrere einzelne Batteriemodule umfasst. Die Batteriemodule sind meist zueinander baugleich sowie miteinander elektrisch in Reihe und/oder parallel geschaltet, sodass die an der Hochvoltbatterie anliegende elektrische Spannung einem Vielfachen der mittels jedes der Batteriemodule bereitgestellten elektrischen Spannung entspricht. Jedes Batteriemodul wiederum umfasst mehrere Batteriezellen, die meist in einem gemeinsamen Gehäuse angeordnet sind, und die miteinander elektrisch in Reihe und/oder parallel geschaltet sind.

Jede Batteriezelle, auch als Batterie, bezeichnet, weist zwei Elektroden, nämlich eine Anode und eine Kathode, sowie einen dazwischen angeordneten Separator als auch einen Elektrolyten mit freibeweglichen Ladungsträgern auf. Als ein derartiger Elektrolyt wird beispielsweise eine Flüssigkeit herangezogen. In einer Alternative ist die Batteriezelle als Festkörperbatterie ausgestaltet, und der Elektrolyt liegt als Festkörper vor.

Die Anode und die Kathode, die die Elektroden der Batteriezelle bilden, umfassen üblicherweise einen Ableiter/Träger, der als Stromableiter fungiert. An diesem ist üblicherweise ein Aktivmaterial befestigt, das ein Bestandteil einer auf den Träger aufgebrachten Schicht ist. Hierbei ist es möglich, dass in der Schicht bereits der Elektrolyt vorhanden ist, oder dieser wird nachträglich eingebracht. Zumindest jedoch ist das Aktivmaterial zur Aufnahme der Arbeitsionen, z.B. Lithium-Ionen, geeignet. Je nach Verwendung als Anode oder Kathode wird ein anderes Material für den Träger und eine unterschiedliche Art des Materials der Schicht verwendet.

Die Schicht wird in einer Alternative als Paste oder Flüssigkeiten auf den jeweiligen Träger, der auch als Ableiter bezeichnet wird, aufgebracht und anschließend dort getrocknet. Hierbei wird ein der Flüssigkeit vorhandenes Lösungsmittel umgewandelt oder teilweise verdampft, sodass ein Festkörper erstellt wird. Zur Trocknung der Flüssigkeit/Paste, also dem Auslösen des Lösungsmittels, ist einerseits eine vergleichsweise große Energiemenge erforderlich. Andererseits ist es erforderlich, das auf diese Weise freigesetzte Lösungsmittel zu entsorgen. Alternativ hierzu wird das Lösungsmittel zurückgewonnen, sodass dieses bei einer erneuten Herstellung verwendet werden kann. Dies ist jedoch vergleichsweise zeit- und energieintensiv.

Eine Alternative hierzu ist eine sogenannte Trockenbeschichtung, die keinen Einsatz eines Lösungsmittels bedarf. Hierbei ist es jedoch erforderlich, dass die als Pulver vorliegende Mischung aus Aktivmaterial und Binder geeignete Eigenschaften aufweist, sodass nach Aufbringen auf den Ableiter die zusammenhängende Schicht als Festkörper entsteht. Aktuelle Verfahren zur Herstellung einer derartigen Pulvermischung, auch als Elektrodenpulvermischung bezeichnet, sehen mehrere aufeinander aufbauende Prozessschritte vor, sodass eine Skalierbarkeit nicht oder lediglich in vergleichsweise schwerem Maße realisierbar ist. Auch ist hierbei eine kontinuierliche Bereitstellung des Elektrodenpulvermischung nicht möglich.

Der Erfindung liegt die Aufgabe zugrunde, ein besonders geeignetes Verfahren zur Herstellung einer Elektrodenpulvermischung einer Batteriezelle, eine besonders geeignete Verwendung einer Maschine, die eine angetriebene, sich in einer Längsrichtung erstreckende Schnecke zur Durchmischung und Förderung eines Pulvers in Längsrichtung aufweist, und ein besonders geeignetes Verfahren zur Herstellung einer Elektrode einer Batteriezelle anzugeben, wobei vorteilhafterweise eine Skalierbarkeit und eine kontinuierliche Herstellung ermöglicht ist.

Hinsichtlich des Verfahrens zur Herstellung einer Elektrodenpulvermischung wird diese Aufgabe durch die Merkmale des Anspruchs 1, hinsichtlich der Verwendung durch die Merkmale des Anspruchs 7 und hinsichtlich des Verfahrens zur Herstellung einer Elektrode durch die Merkmale des Anspruchs 8 erfindungsgemäß gelöst. Vorteilhafte Weiterbildungen und Ausgestaltungen sind Gegenstand der jeweiligen Unteransprüche.

Das Verfahren dient der Herstellung einer Elektrodenpulvermischung einer Batteriezelle. Vorzugsweise ist die Batteriezelle im bestimmungsgemäßen Zustand ein Bestandteil eines Kraftfahrzeugs. Hierfür ist die Batteriezelle geeignet, insbesondere vorgesehen und eingerichtet. Im bestimmungsgemäßen Zustand ist die Batteriezelle beispielsweise ein Bestandteil eines Energiespeichers des Kraftfahrzeugs, der mehrere derartige Batteriezellen aufweist. Vorzugsweise sind hierbei die Batteriezellen auf mehrere Batteriemodule aufgeteilt, die zueinander wiederum baugleich sind. Die Batteriezellen sind insbesondere in einem Gehäuse des Energiespeichers bzw. des jeweiligen Batteriemoduls angeordnet und miteinander elektrisch parallel und/oder in Reihe geschaltet. Somit ist die an dem Energiespeicher/Batteriemodul anliegende elektrische Spannung ein Vielfaches der mittels jeder der Batteriezellen bereitgestellten elektrischen Spannung. Zweckmäßigerweise sind sämtliche Batteriezellen dabei zueinander baugleich, was eine Fertigung vereinfacht. Das Gehäuse ist bevorzugt aus einem Metall gefertigt, beispielsweise einem Stahl, wie einem Edelstahl, oder einer Aluminium-Legierung. Zur Herstellung des jeweiligen Gehäuses wird zum Beispiel ein Druckgussverfahren verwendet. Insbesondere ist das Gehäuse verschlossen ausgestaltet. Zweckmäßigerweise ist in das Gehäuse eine Schnittstelle eingebracht, die einen Anschluss des Energiespeichers/Batteriemoduls bildet. Die Schnittstelle ist dabei elektrisch mit den Batteriezellen kontaktiert, sodass ein Einspeisen von elektrischer Energie und/oder eine Entnahme von elektrischer Energie aus den Batteriezellen von außerhalb des Energiespeichers möglich ist, sofern an den Anschluss ein entsprechender Stecker gesteckt ist.

Das Kraftfahrzeug ist bevorzugt landgebunden und weist vorzugsweise eine Anzahl an Rädern auf, von denen zumindest eines, vorzugsweise mehrere oder alle, mittels eines Antriebs angetrieben sind. Geeigneterweise ist eines, vorzugsweise mehrere, der Räder steuerbar ausgestaltet. Somit ist es möglich, das Kraftfahrzeug unabhängig von einer bestimmten Fahrbahn, beispielsweise Schienen oder dergleichen, zu bewegen. Dabei ist es zweckmäßigerweise möglich, das Kraftfahrzeug im Wesentlichen beliebig auf einer Fahrbahn zu positionieren, die insbesondere aus einem Asphalt, einem Teer oder Beton gefertigt ist. Das Kraftfahrzeug ist beispielsweise ein Nutzkraftwagen, wie ein Lastkraftwagen (Lkw) oder ein Bus. Besonders bevorzugt jedoch ist das Kraftfahrzeug ein Personenkraftwagen (Pkw).

Mittels des Antriebs erfolgt zweckmäßigerweise eine Fortbewegung des Kraftfahrzeugs. Zum Beispiel ist der Antrieb, insbesondere der Hauptantrieb, zumindest teilweise elektrisch ausgestaltet, und das Kraftfahrzeug ist beispielsweise ein Elektrofahrzeug. Der Elektromotor wird zum Beispiel mittels des Energiespeichers betrieben, der geeigneterweise als eine Hochvoltbatterie ausgestaltet ist. Mittels der Hochvoltbatterie wird zweckmäßigerweise eine elektrische Gleichspannung bereitgestellt, wobei die elektrische Spannung zum Beispiel zwischen 200 V und 800 V und beispielsweise im Wesentlichen 400 V beträgt. Vorzugsweise ist zwischen dem Energiespeicher und dem Elektromotor ein elektrischer Umrichter angeordnet, mittels dessen die Bestromung des Elektromotors eingestellt wird. In einer Alternative weist der Antrieb zusätzlich einen Verbrennungsmotor auf, sodass das Kraftfahrzeug als Hybrid-Kraftfahrzeug ausgestaltet ist. In einer Alternative wird mittels des Energiespeichers ein Niedervoltbordnetz des Kraftfahrzeugs gespeist, und mittels des Energiespeichers wird insbesondere eine elektrische Gleichspannung von 12 V, 24 V oder 48 V bereitgestellt.

In einer Alternative ist die Batteriezelle ein Bestandteil eines Flurförderfahrzeug, einer Industrieanlage oder eines handgeführten Geräts, wie beispielsweise eines Werkzeugs, insbesondere eines Akkuschraubers. In einer weiteren Alternative ist die Batteriezelle ein Bestandteil einer Energieversorgung und wird dort beispielsweise als sogenannte Pufferbatterie verwendet. In einer weiteren Alternative ist die Batteriezelle ein Bestandteil eines tragbaren Geräts, beispielsweise eines tragbaren Mobiltelefons, oder eines sonstigen Wearables. Auch ist es möglich, eine derartige Batteriezelle im Campingbereich, Modellbaubereich oder für sonstige Outdoor-Aktivitäten zu verwenden.

Im bestimmungsgemäßen Zustand ist die Batteriezelle, auch als Batterie bezeichnet, ein galvanisches Element, das zwei Elektroden aufweist, nämlich eine Anode und eine Kathode. Zwischen diesen ist zweckmäßigerweise ein Separator angeordnet, und die Batteriezelle umfasst vorzugsweise einen Elektrolyten, der eine Anzahl an freibeweglichen Ladungsträger, wie z.B. Lithium-Ionen, bereitstellt. Beispielsweise ist der Elektrolyt ein Bestandteil der Anode und/oder Kathode, oder ist zumindest geeignet, sich dort anzulagern und somit von diesen aufgenommen zu werden. Die Batteriezelle ist beispielsweise eine Festkörperbatterie, sodass der Elektrolyt als Festkörper vorliegt. Alternativ ist der Elektrolyt flüssig.

Jede der Elektroden umfasst einen Ableiter, der auch als Träger bezeichnet wird. Auf jeden der Ableiter ist insbesondere eine Schicht aufgebracht, wobei zumindest eine der Schichten aus der Elektrodenpulvermischung erstellt wurde. Hierbei ist die Elektrodenpulvermischung auf die jeweilige Elektrode also an die Anode bzw. Kathode angepasst, sodass es sich entweder um eine Anodenpulvermischung oder eine Kathodenpulvermischung handelt.

Das Verfahren zur Herstellung der Elektrodenpulvermischung, auch als Blend oder Elektroden-Blend bezeichnet, sieht vor, dass eine Maschine verwendet wird, die eine angetriebene, sich in einer Längsrichtung erstreckende Schnecke umfasst. Die Schnecke, die insbesondere auch als Spindel bezeichnet wird, dient hierbei der Durchmischung und Förderung eines Pulvers in der Längsrichtung und ist hierfür geeignet, insbesondere vorgesehen und eingerichtet. Die Schnecke ist insbesondere schrauben- und/oder helixförmig. In einen Einfüllbereich der Maschine, wird ein Aktivmaterial, ein Binder und ein Leitadditiv eingefüllt. Beispielsweise ist der Einfüllbereich mittels einer einzigen Öffnung gebildet, oder der Einfüllbereich weist mehrere Öffnungen auf, wobei durch jede der Öffnungen ein unterschiedliches der genannten Materialien eingefüllt wird. So wird beispielsweise durch eine der Öffnungen das Aktivmaterial, durch eine andere der Öffnungen der Binder und durch eine weitere das Leitadditiv eingefüllt. Somit ist eine Dosierbarkeit verbessert. Alternativ werden in eine der Öffnungen zwei unterschiedliche der genannten Materialien eingefüllt. Beispielsweise befinden sich die Öffnungen an der gleichen Position in Längsrichtung oder sind in Längsrichtung zueinander versetzt.

Insbesondere ist jede der Öffnungen mittels eines entsprechenden Trichters gebildet, sodass ein im Wesentlichen kontinuierliches Einfüllen ermöglicht ist. Die Aktivmaterial, der Binder und das Leitadditiv liegen jeweils zweckmäßigerweise als Pulver oder Granulat vor. Mittels der Schnecke erfolgt nach Einfüllen vorzugsweise eine Zerkleinerung und/oder ein Zermahlen, sodass das etwaige Granulat zu einem Pulver verarbeitet wird oder zumindest die Körnergröße verringert wird. Hierfür weist die Schnecke insbesondere im Einfüllbereich oder mit einem vergleichsweise geringen Abstand hierzu ein Mahlwerk auf, beispielsweise Zahnräder, sodass die Bestandteile zu dem Pulver zermahlen werden. Mittels der Schnecke erfolgt zudem ein Vermischen des Binders, des Aktivmaterials und des Leitadditiv zu einem ersten Pulver und ein Transport in Längsrichtung von dem Einfüllbereich weg. Zusammenfassend erfolgt bei dem Vermischen insbesondere zumindest teilweise ein Zermahlen der einzelnen Bestandteile, und/oder in dem ersten Pulver liegen sämtliche Bestandteile vor, und diese sind jeweils pulverförmig. Vorzugsweise ist dabei das erste Pulver homogen.

Ferner wird mittels der Schnecke aus dem ersten Pulver ein zweites Pulver erstellt, indem der Binder fibrilliert wird. Hierfür ist die Schnecke entsprechend angepasst und weist beispielsweise ein Knetwerk oder Knetelemente auf. Insbesondere sind diese mittels trapezförmiger Strukturen senkrecht zur Längsrichtung gebildet. Bei der Fibrillierung wird der Binder zu einzelnen Fasern gestreckt, und in dem zweiten Pulver liegt somit der Binder faser- oder clusterförmig vor, wobei sich mehrere derartige Fasern in dem zweiten Pulver befinden. Zusammenfassend werden beim Fibrillieren insbesondere somit die einzelnen Partikel des Binders jeweils zu einer dünnen Faser gestreckt. Die Position des zweiten Pulvers ist aufgrund der Förderwirkung der Schnecke bezüglich des ersten Pulvers in Längsrichtung versetzt, und zwischen diesen befindet sich insbesondere ein Übergangsbereich, in dem der Binder zumindest teilweise fibrilliert vorliegt.

Aus dem zweiten Pulver wird mittels der Schnecke die Elektrodenpulvermischung erstellt, indem der fibrillierte Binder erneut zerkleinert wird. Hierfür ist die Schnecke zweckmäßigerweise entsprechend angepasst und weist beispielsweise ein Zahnrad oder dergleichen auf. Mittels der Schnecke werden somit die einzelnen Binderfasern zerteilt so, sodass diese jeweils eine bestimmte Länge aufweisen. Hierbei bleiben jedoch die einzelnen Fasern des Binders zumindest teilweise erhalten, jedoch weisen diese in der Elektrodenpulvermischung eine verringerte Länge auf.

Zusammenfassend wird somit mittels der Schnecke das Aktivmaterial, der Binder und das Leitadditiv von dem Einfüllbereich in Längsrichtung zu der Entnahmeöffnung transportiert, wobei die Entnahmeöffnung in Längsrichtung zu dem Einfüllbereich beabstandet ist. Währenddessen der Binder aktiviert wird mittels der Schnecke der Binder in dem Aktivmaterial und dem Leitadditiv verteilt und anschließend aktiviert sowie mit den weiteren Bestandteilen vernetzt, sodass eine Agglomeration vorliegt. Somit ist die Elektrodenpulvermischung fließfähig und nichtstaubend. Das Verfahren sieht anschließend vor, dass die Elektrodenpulvermischung an einer Entnahmeöffnung aus der Maschine entnommen wird. Falls nun anschließend die Elektrodenpulvermischung erhitzt oder mit einem Druck versehen wird, entsteht aufgrund des aktivierten Binders aus der Elektrodenpulvermischung ein Festkörper, der als Schicht einer Elektrode verwendet werden kann.

Bei dem Verfahren wird insbesondere die Maschine kontinuierlich betrieben und kontinuierlich das Aktivmaterial, der Binder und das Leitadditiv eingefüllt. Auch werden vorzugsweise die andere Prozessschritten im Wesentlichen kontinuierlich durchgeführt, sodass kontinuierlich die Elektrodenpulvermischung erstellt wird. Somit ist eine kontinuierliche Verarbeitung der Elektrodenpulvermischungen zu einer Elektrode ermöglicht, wobei je nach Bedarf insbesondere auch eine unterschiedliche Prozessgeschwindigkeit gewählt werden kann. Zudem ist das Verfahren skalierbar ausgestaltet. Insbesondere ist die hergestellte Elektrodenpulvermischungen lösungsmittelfrei, und zur Erstellung der Elektrode ist es auch nicht erforderlich, der Elektrodenpulvermischung ein Lösungsmittel zu zusetzen, das nachfolgend entfernt oder umgewandelt wird. Somit sind ein Materialbedarf und Energiebedarf verringert.

Vorzugsweise ist die Maschine in drei unterschiedliche Bereiche unterteilt, wobei in jedem der Bereiche unterschiedliche Pulver erstellt werden. Insbesondere befinden sich zwischen den einzelnen Bereichen hierbei Elemente, mittels derer die einzelnen Pulverbestandteile zurückgehalten werden, wenn diese bestimmte Vorgaben nicht erfüllen. Als derartige Elemente sind beispielsweise Stufen vorgesehen oder sonstige Rückförderelemente. So ist es insbesondere lediglich möglich, in den zweiten Bereich, in dem insbesondere das zweite Pulver erstellt wird, lediglich das erste Pulver einzuleiten, also insbesondere eine homogene Mischung des Aktivmaterials, des Binders und des Leitadditivs. Falls noch keine homogene Mischung vorhanden ist, wird diese insbesondere zurückgehalten oder der Übergang der Bereiche der Maschine sind insbesondere derart zueinander angeordnet, vorzugsweise voneinander beabstandet, dass lediglich ein Eindringen des ersten Pulvers in den zweiten Bereich stattfindet. Ebenso ist vorzugsweise aufgrund der Rückförderelemente lediglich ein Eindringen des zweiten Pulvers in den dritten Bereich, in dem das Zerkleinern des fibrillierten Binders erfolgt, ermöglicht. Ferner ist die Entnahmeöffnung vorzugsweise derart positioniert, dass dort lediglich die Elektrodenpulvermischung, jedoch keine weiteren Bestandteile des zweiten Pulvers entnommen werden können, also lediglich ein Pulver, bei dem der fibrillierte Binder bereits verkleinert ist. Vorzugsweise weist hierbei die Maschine an der Entnahmeöffnung keine Düse auf, sodass dort keine Drücke entstehen und eine Scherwirkung vermieden wird.

Die Schnecke ist vorzugsweise entsprechend angepasst, sodass mittels dieser die einzelnen Aufgaben, also das Vermischen, dass Fibrillieren und das Zerkleinern geeignet durchgeführt werden können. Hierfür weist die Schnecke in den jeweiligen Bereichen vorzugsweise bestimmte Elemente auf. So weist die Schnecke beispielsweise in dem ersten Bereich, in dem des erste Pulver erstellt wird, eine Wendel auf und/oder Zahnräder, sodass dort eine Zerkleinerung erfolgt. Insbesondere erfolgt somit in dem ersten Bereich eine hohe Misch- und Zerkleinerungswirkung, sodass eine Homogenisierung erfolgt. In dem zweiten Bereich, in dem das Fibrillieren des Binders erfolgt, sind vorzugsweise Knetelemente angeordnet. Der zweite Bereich zeichnet sich durch eine hohe Knet- und Scherwirkung der Schnecke auf, sodass die Fibrillierung des Binders stattfindet. In dem dritten Bereich, in dem die Elektrodenpulvermischung erstellt wird, herrscht vorzugsweise eine mäßige Zerkleinerungswirkung vor, sodass der fibrillierte Binder zerkleinert wird, und die fließfähige, nicht staubende Elektrodenpulvermischung erstellt wird.

Als Aktivmaterial wird beispielsweise ein Lithium-Metall-Oxid, wie Lithium-Cobalt(III)-Oxid (LiCoO2), NMC, NCA, LFP, GIC, LTO verwendet. Alternativ wird als Aktivmaterial NMC622 oder NMC811 herangezogen. Vorzugsweise wird als Binder PTFE, also Polytetrafluorethylen, verwendet. Bei diesem ist das Fibrillieren vereinfacht, wobei auch eine Vernetzung mit den weiteren eingefüllten Bestandteilen erfolgt. Somit ist eine Aktivierung vereinfacht, sodass die Schicht der Elektrode verbesserte Eigenschaften aufweist. Zumindest jedoch enthält der Binder PTFE. Beispielsweise umfasst der Binder einen weiteren Bestandteil, sodass dieser als Mischung vorliegt. Zum Beispiel ist der weitere Bestandteil PVDF. Alternativ wird PVDF als Binder verwendet. Beispielsweise wird als Leitadditiv Leitruß, Leitgraphit oder Nanoröhrchen verwendet.

Beispielsweise erfolgt das Vermischen des Aktivmaterials, des Binders und des Leitadditivs lediglich mittels der Maschine, und in diese werden die einzelnen Bestandteile separat eingefüllt. Besonders bevorzugt jedoch das Aktivmaterial und der Binder vor dem Einfüllen in die Maschine bereits vorgemischt. Eine Vormischung mit dem Leitadditiv erfolgt zweckmäßigerweise nicht, sodass zum Beispiel keine Desagglomeration während der Zerkleinerung der Agglomerate, insbesondere aus dem Binder und dem Aktivmaterial, erfolgt oder zumindest reduziert ist. Somit ist mit der Maschine lediglich eine vergleichsweise geringe Vermischung erforderlich, nämlich das Beimischen des Leitadditivs. Infolgedessen ist es möglich, die Maschine in Längsrichtung vergleichsweise kompakt auszugestalten sind. Mit an anderen Worten ist die Anforderung an die Maschine zur Durchmischung reduziert, und zumindest ein Teil der Vermischung des Binders mit dem Aktivmaterial erfolgt separat. Somit ist es möglich, den ersten Bereich der Maschine vergleichsweise kompakt auszugestalten und die Schnecke lediglich zur Vermischung des Leitadditivs den weiteren Bestandteilen hin zu optimieren. Vorzugsweise erfolgt bei dem Vormischen auch eine Zerkleinerung des Aktivmaterials und/oder des Binders, falls diese als Granulat vorliegen. Somit weist das Gemisch aus Aktivmaterial und Binder nach dem Vormischen im Wesentlichen die gleiche Korngröße auf, was das Weitervermischen mit dem Leitadditiv vereinfacht. Vorzugsweise wird für das vormachen eine Ultrazentrifugalmühle verwendet.

Beispielsweise wird die Elektrodenpulvermischung direkt weiterverarbeitet und somit lediglich für den aktuellen Bedarf produziert. Dies ist insbesondere aufgrund der Skalierbarkeit und des kontinuierlichen Herstellerverfahrens ermöglicht. Alternativ hierzu wird die Elektrodenpulvermischung in ein Silo oder ein sonstiges Zwischenlager gefüllt, nachdem diese der Maschine entnommen wurde. Folglich ist eine Lagerhaltung möglich, sodass einerseits ein wechselnder Bedarf abgefangen werden kann. Andererseits ist auf diese Weise bei lediglich zeitweisem Vorhandensein der Ausgangsstoffe kein Unterbrechen der Herstellung der Elektroden erforderlich.

Beispielsweise wird als Maschine ein Extruder herangezogen, der lediglich eine einzige Schnecke aufweist. Besonders bevorzugt jedoch umfasst die Maschine eine zweite Schnecke, die sich ebenfalls in die Längsrichtung erstreckt, und die in die Schnecke eingreift. Zum Beispiel sind die beiden Schnecken zueinander baugleich oder unterschiedlich. Bei Betrieb der Maschine werden die beiden Schnecken jeweils um eine Achse rotiert, die parallel zur Längsrichtung ist, und die beiden Schnecken kämen miteinander. Dabei ist die Drehrichtung beispielsweise gleich oder bevorzugt unterschiedlich. Infolgedessen ist ein Mischergebnis verbessert, sodass das erste Pulver homogener ist. Auch ist mittels der zweiten Schnecke ein Knetvorgang verbessert, weswegen das Fibrillieren des Binders verbessert ist. Ferner ist das nachfolgende Zerkleinern des fibrillierten Binders mittels der zweiten Schnecke vergleichsweise genau einstellbar. Zusammenfassend ist aufgrund der zweiten Schnecke die Qualität der Elektrodenpulvermischung verbessert, wobei zudem eine Baugröße der Maschine in Längsrichtung verringert werden kann.

Beispielsweise umfasst die Maschine noch weiter Schnecken, und Maschine ist beispielsweise als Planetenextruder ausgestaltet. In einer Alternative hierzu ist die Maschine ein kontinuierlicher Kneter, weswegen das Knetergebnis verbessert ist, also insbesondere der Fibrilliervorgang. Dabei ist aufgrund der kontinuierlichen Ausgestaltung der Knetmaschine, also des Kneters, ein kontinuierliches Erstellen der Elektrodenpulvermischung ermöglicht. Hierbei ist es auch möglich, dass zumindest eine der Schnecken senkrecht zur Längsachse angeordnet ist. Besonders bevorzugt jedoch ist die Maschine ein Doppelschneckenextruder, wobei die beiden Schnecken beispielsweise gelichläufig oder entgegengesetzt drehen. Somit kann eine bereits vorhandene Maschine zur Herstellung der Elektrodenpulvermischung verwendet werden, weswegen eine vergleichsweise kostenintensive Neuentwicklung nicht erforderlich ist. Auch ist bei einem Doppelschneckenextruder eine Anpassbarkeit der beiden Schnecken an die aktuellen Anforderungen vergleichsweise einfach möglich, und/oder es können bereits vorhandene Bauteile verwendet werden, sodass keine Neukonstruktion erforderlich ist.

Eine Maschine, die eine angetriebene, sich in einer Längsrichtung erstreckende Schnecke zur Durchmischung und Förderung eines Pulvers in der Längsrichtung aufweist, wird zur Herstellung einer Elektrodenpulvermischung, insbesondere eines Blends, einer Batteriezelle verwendet. Als Maschine wird beispielsweise ein Extruder, vorzugsweise ein Doppelschneckenextruder verwendet. Die Maschine wird dabei zweckmäßigerweise zur Durchführung eines Verfahrens verwendet, bei dem zunächst ein Aktivmaterial, in Binder und ein Leitadditiv in die Maschine eingeführt werden und mittels der Schnecke zu einem ersten Pulver vermischt werden. Das erste Pulver wird mittels der Schnecke zu einem zweiten Pulver verarbeitet, wobei hierfür der Binder fibrilliert wird. Mittels der Schnecke wird aus dem zweiten Pulver die Elektrodenpulvermischung erstellt, indem der fibrillierte Binder zerkleinert wird. Vorzugsweise umfasst die Maschine eine Steuereinheit, die geeignet, vorzugsweise vorgesehen und eingerichtet ist, das Verfahren durchzuführen. Insbesondere umfasst die Erfindung auch eine derartige Maschine.

Geeigneterweise sind in der Maschine unterschiedliche Bereiche gebildet, wobei jeder der Bereiche zur Herstellung des jeweiligen Pulvers dient, und wobei am Ende des jeweiligen Bereichs in Längsrichtung das jeweilige Pulver vorliegt, also das erste Pulver, zweite Pulver bzw. die Elektrodenpulvermischung. Zwischen den Bereichen befinden sich insbesondere Rückforderungselemente, sodass den jeweiligen Bereich lediglich das jeweils fertig gestellte Pulver verlassen kann. Die Bereiche unterscheiden sich dabei insbesondere anhand der Form der jeweiligen Schnecke, also insbesondere der Elemente der Schnecke.

Das Verfahren zur Herstellung einer Elektrode einer Batteriezelle sieht vor, dass zunächst eine Elektrodenpulvermischung hergestellt wird. Die Elektrodenpulvermischung wird nachfolgend auf einen Ableiter aufgebracht, vorzugsweise mittels einer Rollenpresse, eines Kalanders oder eines Walzenstuhls. Der Ableiter ist insbesondere aus einem Metall gefertigt und beispielsweise eine Metallfolie. Als Metall wird zweckmäßiger Aluminium oder ein Kupfer herangezogen. Der Ableiter ist insbesondere flächen- oder streifenförmig. Bevorzugt ist vor dem Aufbringen der Elektrodenpulvermischung auf dem Ableiter eine Haftvermittlerschicht aufgetragen, sodass ein Anhaften der Elektrodenpulvermischung verbessert ist. Die Haftvermittlerschicht ist zum Beispiel aus einem Kohlenstoff und einem oder dem Binder erstellt.

Aus der Elektrodenpulvermischung wird nachfolgend eine Schicht erstellt, die zum Beispiel durchgängig ist. Hierfür wird insbesondere die Elektrodenpulvermischung und/oder der Ableiter erwärmt und beispielsweise ein Druck auf die Elektrodenpulvermischung in Richtung des Ableiter ausgeübt. Insbesondere wird hierfür ein Kalender herangezogen, beispielsweise ein 4-Walzenkalender, sodass der Ableiter beidseitig mit der Schicht versehen wird. Mittels des Kalenders wird insbesondere in einem Kalandrierprozess eine Dicke der Elektrodenpulvermischung auf dem Ableiter und somit die Dicke der Schicht eingestellt.

Zusammenfassend wird aus der Elektrodenpulvermischung die Schicht erstellt, die auf den Ableiter aufgebracht ist, und die das Aktivmaterial der jeweiligen Elektroden umfasst. In Abhängigkeit der Elektrode, also ob es sich um eine Kathode oder Anode handelt, wird das Material des Ableiters und/oder das Aktivmaterial gewählt. Zur Herstellung der Elektrode wird vorzugsweise kein Lösungsmittel verwendet, das zur Herstellung der Schicht aus der Elektrodenpulvermischung entfernt wird. Mit anderen Worten ist das Verfahren zur Herstellung der Elektrode lösungsmittelfrei.

Die Erfindung betrifft ferner eine auf diese Weise hergestellte Elektrode sowie eine Batteriezelle mit zwei Elektroden, wobei zumindest eine der beiden Elektroden, vorzugsweise beide, entsprechend eines derartigen Verfahrens hergestellt wurde.

Die im Zusammenhang mit den beiden Verfahren beschriebenen Vorteile und Weiterbildungen sind sinngemäß auch auf die Verwendung/Elektrode/Batterie/Maschine und untereinander zu übertragen und umgekehrt.

Nachfolgend werden Ausführungsbeispiele der Erfindung anhand einer Zeichnung näher erläutert. Darin zeigen:
- Fig. 1: schematisch vereinfacht ein Kraftfahrzeug, das eine Hochvoltbatterie mit mehreren baugleichen Batteriezellen aufweist,
- Fig. 2: in einer Seitenansicht eine der zueinander baugleichen Batteriezellen,
- Fig. 3: in einer Prozessdarstellung ein Verfahren zur Herstellung einer Elektrode einer Batteriezelle, das ein Verfahren zur Herstellung einer Elektrodenpulvermischung umfasst,
- Fig. 4: schematisch vereinfacht in einer Schnittdarstellung entlang einer Längsrichtung eine Maschine, die eine angetriebene, sich in der Längsrichtung erstreckende Schnecke zur Durchmischung und Förderung eines Pulvers in Längsrichtung aufweist, und
- Fig. 5: gemäß Fig. 3 eine alternative Ausführungsform des Verfahrens zur Herstellung einer Elektrode einer Batteriezelle.

Einander entsprechende Teile sind in allen Figuren mit den gleichen Bezugszeichen versehen.

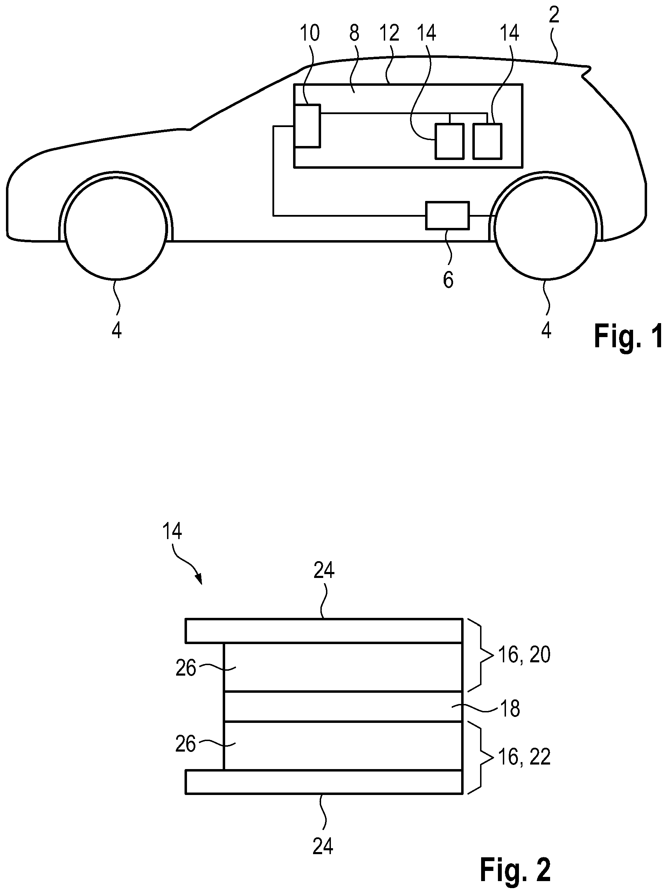

In Figur 1 ist schematisch vereinfacht ein Kraftfahrzeug 2 in Form eines Personenkraftwagens (Pkw) dargestellt. Das Kraftfahrzeug 2 weist eine Anzahl an Rädern 4 auf, von denen zumindest einige mittels eines Antriebs 6 angetrieben sind, der einen Elektromotor umfasst. Somit ist das Kraftfahrzeug 2 ein Elektrofahrzeug oder ein Hybrid-Fahrzeug. Der Antrieb 6 weist einen Umrichter auf, mittels dessen der Elektromotor bestromt ist. Der Umrichter des Antriebs 6 wiederum ist mittels eines Energiespeichers 8 in Form einer Hochvoltbatterie bestromt. Hierfür ist der Antrieb 6 mit einer Schnittstelle 10 des Energiespeichers 8 verbunden, die in ein Gehäuse 12 des Energiespeichers 8 eingebracht ist, das aus einem Edelstahl erstellt ist. Innerhalb des Gehäuses 12 sind mehrere Batteriemodule angeordnet, die miteinander elektrisch kontaktiert sind. Ein Teil der Batteriemodule ist dabei zueinander elektrisch in Reihe und diese wiederum elektrisch zueinander parallel geschaltet sind. Der elektrische Verband der Batteriemodule ist mit der Schnittstelle 10 elektrisch kontaktiert, sodass bei Betrieb des Antriebs 6 ein Entladen oder Laden (Rekuperation) der Batteriemodule erfolgt. Aufgrund der elektrischen Verschaltung ist dabei die an der Schnittstelle 10 bereitgestellte elektrische Spannung, die 400 V beträgt, ein Vielfaches der mit den zueinander baugleichen Batteriemodule jeweils bereitgestellten elektrischen Spannung.

Jedes Batteriemodul weist wiederum mehrere Batteriezellen 14 auf, von denen hier zwei gezeigt sind. Ein Teil der Batteriezellen 14 jedes Batteriemoduls sind zueinander elektrisch in Reihe geschaltet. Die auf diese Weise gebildeten Stränge wiederum sind zueinander elektrisch parallel geschaltet. Somit ist die mittels jedes der Batteriemodulen bereitgestellte elektrische Spannung ein Vielfaches der mittels einer der zueinander baugleichen Batteriezellen 14, die jeweils als Lithium-Ionen-Batteriezellen ausgestaltet sind.

In Figur 2 ist in einer Seitenansicht eine der zueinander baugleichen Batteriezellen 14 dargestellt. Die Batteriezelle 14 weist zwei Elektroden 16 auf, die über einen Separator 18 voneinander getrennt sind. Die beiden Elektroden 16 und der Separator 18 sind übereinandergestapelt und liegen jeweils direkt aneinander an. Eine der Elektroden 16 ist eine Anode 20, und die verbleibenden der Elektroden 16 ist eine Kathode 22.

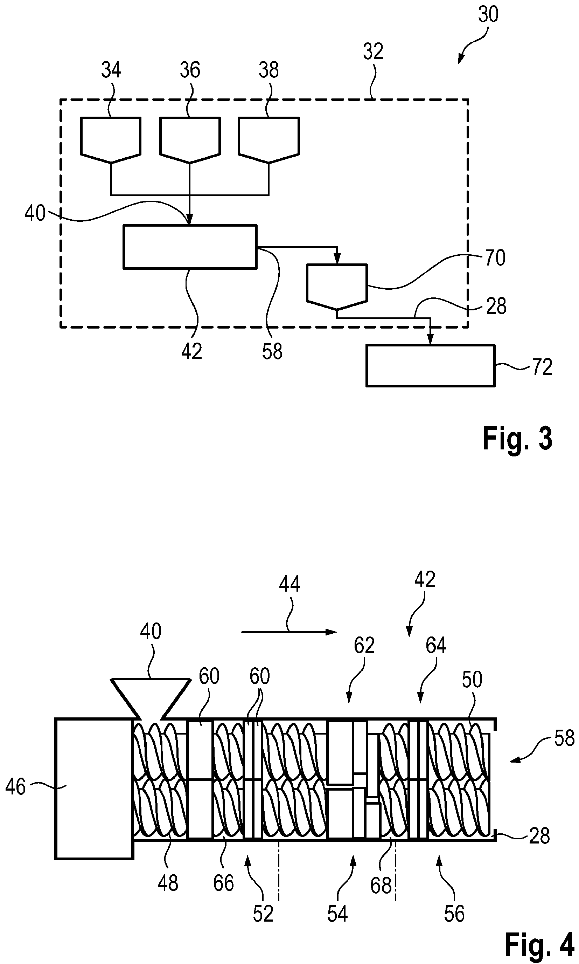

Die beiden Elektroden 16 sind zueinander gleichartig aufgebaut und weisen jeweils einen Ableiter 24, auch als Träger bezeichnet, auf, der aus einer Metallfolie gefertigt ist. Im Fall der Anode 20 ist der Ableiter 24 aus einer Kupferfolie und im Fall der Kathode 22 aus einer Aluminiumfolie gefertigt. Auf jeden Ableiter 24 ist jeweils eine Schicht 26 aufgetragen, die jeweils aus einer ausgehärteten Elektrodenpulvermischung 28 (Fig. 3) erstellt wurde. Im Fall der Anode 20 handelt es sich bei Elektrodenpulvermischung 28 dabei um eine Anodenpulvermischung und im Fall der Kathode 22 um eine Kathodenpulvermischung. Die Dicke jeder der Schichten 26 ist zwischen 60 µm und 100 µm.

In Figur 3 ist in einer Prozessdarstellung ein Verfahren 30 zur Herstellung einer der Elektroden 16 dargestellt. Hierbei ist beispielsweise eine der beiden Elektroden 16 entsprechend des Verfahrens 30 hergestellt, oder beide, wobei sich dabei die Ausgangsstoffe unterscheiden. Das Verfahren 30 zur Herstellung der Elektrode 16 weist ein Verfahren 32 zur Herstellung der Elektrodenpulvermischung 28 auf. Bei dem Verfahren 32 zur Herstellung der Elektrodenpulvermischung 28 wird zunächst ein Aktivmaterial 34, wie NMC, ein Binder 36 und ein Leitadditiv 38 bereitgestellt. Als Binder 36 wird dabei PTFE (Polytetrafluorethylen) und als Leitadditiv 38 Leitruß herangezogen. Das Aktivmaterial 34, der Binder 36 sowie das Leitadditiv 38 werden in einen Einfüllbereich 40 einer Maschine 42 eingefüllt, wobei das Aktivmaterial 34 und der Binder 36 zumindest teilweise als Granulat vorliegen.

In Figur 4 ist die Maschine 42 in einer Schnittdarstellung entlang einer Längsrichtung 44 gezeigt. Die Maschine 42 weist einen Antrieb 46 auf, mittels derer eine Schnecke 48 und eine zweite Schnecke 50 angetrieben sind, die sich in der Längsrichtung 44 erstrecken und ineinandergreifen. Hierbei dienen die Schnecke 48 und die zweite Schnecke 50 der Durchmischung und Förderung eines Pulvers in Längsrichtung 44. Mittels des Antriebs 4 werden die beiden Schnecken 48, 50 zueinander entgegengesetzt um eine Achse parallel zur Längsrichtung 44 rotiert. Bei der Maschine 42 handelt es sich um einen Doppelschneckenextruder, der somit zur Herstellung der Elektrodenpulvermischung 28 verwendet wird.

Die beiden Schnecken 48, 50 verlaufen durch einen ersten Bereich 52, der mittels des Antriebs 46 begrenzt ist, einen zweiten Bereich 54 und einen dritten Bereich 56, der an einer Entnahmeöffnung 58 endet. Dabei befindet sich der zweite Bereich 54 zwischen dem ersten Bereich 52 und dem dritten Bereiche 56, und zwischen diesen sind jeweils nicht näher dargestellte Rückförderelemente angeordnet. In den erste Bereich 48 mündet der Einfüllbereich 40, der als Trichter ausgestaltet ist. In dem erste Bereich 48 ist mittels der beiden Schnecken 48, 50 ein erstes Mahlwerk 60 gebildet, das mehrere Zahnräder aufweist, die ineinandergreifen, wobei jeder der Schnecken 48, 50 die gleiche Anzahl an Zahnrädern zugeordnet sind.

In dem zweiten Bereich 54 ist mittels der beiden Schnecken 48, 50 ein Knetwerk 62 gebildet, das mehrere trapezförmige Elemente umfasst, die teilweise ineinandergreifen. Auch hier ist jeder der Schnecken 48, 50 die gleiche Anzahl an trapezförmigen (Knet-)Elementen zugeordnet. In dem dritten Bereich 56 ist eine zweites Mahlwerk 64 mittels der beiden Schnecken 48, 50 gebildet, das ebenfalls mehrere ineinandergreifende Zahnräder aufweist, die den beiden Schnecken 48, 50 zugeordnet sind. Das zweite Mahlwerk 64 weist weniger Zahnräder auf als das erste Mahlwerk 60, sodass dort eine Zerkleinerungswirkung vermindert ist. Bei Betrieb des Antriebs 46 werden die beiden Schnecken 48, 50 rotiert und somit Mahlwerke 60, 64 und das Knetwerk 64 betrieben.

Zwischen dem ersten Mahlwerk 60, dem Knetwerk 62 und dem zweiten Mahlwerk 64 ist jede der Schnecken 48, 50 wendel- oder schraubenartig ausgestaltet, sodass diese der Förderung eines sich zwischen den beiden Schnecken 48, 50 befindenden Pulvers in Längsrichtung 44 von dem Einfüllbereich 40 in Richtung der Entnahmeöffnung 58 dienen, die in Längsrichtung 44 von dem Einfüllbereich 40 beabstandet ist.

Bei dem Verfahren 32 zur Herstellung der Elektrodenpulvermischung 28 wird mittels der beiden Schnecken 48, 50 der Binder 36, das Aktivmaterial 34 und das Leitadditiv 38, nachdem diese durch die Einfüllöffnung 40 eingefüllt wurden, zu einem ersten Pulver 66 vermischt, wobei die gröberen Bestandteile mittels des ersten Mahlwerks 60 zerkleinert werden. Das erste Pulver 66 wird mittels der beiden Schnecken 48, 50 in Längsrichtung 44 zu dem zweiten Bereich 54 gefördert. Mittels der Rückförderelemente werden dabei die gröberen/granularen Bestandteile zurückgehalten, und lediglich, wenn diese zu dem homogenen ersten Pulver 66 vermischt sind, und eine geeignete Korngröße aufweisen, werden diese in den zweite Bereich 54 durchgelassen.

In dem zweiten Bereich 54 wird mittels der Schnecken 48, 50, nämlich mittels des Knetwerks 62, das erste Pulver 66 geknetet und dabei der Binder 36 fibrilliert. Folglich werden einzelne Fasern des Binder 36 erzeugt, der in dem ersten Pulver 66 lediglich in Pulverform oder partikulärer Form vorliegt. Wenn der Binder 36 in dem ersten Pulver 66 fibrilliert wurde, ist aus diesem ein zweite Pulver 68 gebildet, das somit das zermahle Aktivmaterial 34 und Leitadditiv 38 aufweist, in die der fibrillierte Binder 36 gemischt und mit denen fibrillierte Binder 36 vernetzt ist. Zusammenfassend wird aus dem ersten Pulver 66 das zweite Pulver 68 erstellt, indem der Binder 36 fibrilliert wird.

Das zweite Pulver 68 wird mittels der beiden Schnecken 48, 50 zu dem dritten Bereich 56 in Längsrichtung 44 gefördert. Hierbei wird jedoch mittels der Rückförderelemente eine Förderung des ersten Pulvers 66 in den dritte Bereich 56 verhindert. In dem dritte Bereich 56 wird dabei mittels des zweiten Mahlwerks 64 der fibrillierte Binder 36 zerkleinert und somit aktiviert. Nach dem Zerkleinern des fibrillierten Binders 36 ist die Elektrodenpulvermischung 28 fertig erstellt, und diese wird aus der Entnahmeöffnung 58 mittels der beiden Schnecken 48, 50 befördert und somit dort entnommen. Auch dort sind Rückförderelemente angeordnet, sodass eine Entnahme des zweiten Pulvers 68 vermieden ist.

Sofern der Antrieb 46 kontinuierlich betrieben und das Leitadditiv 34, der Binder 36 und das Leitadditiv 38 kontinuierlich in den Einfüllbereich 40 eingefüllt werden, wird die Elektrodenpulvermischung 28 kontinuierlich erstellt, wobei je nach Antriebsgeschwindigkeit der beiden Schnecken 48, 50 die Erstellgeschwindigkeit der Elektrodenpulvermischung 28 eingestellt wird. Somit ist ein skalierbarer Prozess realisiert. Auch ist die Elektrodenpulvermischung 28 lösungsmittelfrei.

Nachfolgend wird die mittels der Maschine 42 erstellte Elektrodenpulvermischung 28, die nicht staubt und fließfähig ist, in ein Silo 70 oder ein sonstiges Lager gefüllt, sodass eine Vorratshaltung und Lagerung durchgeführt wird. Mittels Entnahme der Elektrodenpulvermischung 28 aus dem Silo 70 ist das Verfahren 32 zur Erstellung der Elektrodenpulvermischung 28 beendet. Es ist jedoch auch möglich, das Silo 70 nicht zu verwenden oder überhaupt nicht vorzusehen, sodass mittels Entnahme der Elektrodenpulvermischung 28 aus der Maschine 42 das Verfahren 30 zur Herstellung der Elektrodenpulvermischung 28 beendet ist. In diesem Fall wird stets genau die jeweils benötigte Menge der Elektrodenpulvermischung 28 hergestellt.

In einer nicht näher dargestellten Variante wird bei dem Verfahren 32 zur Herstellung der Elektrodenpulvermischung 28 das Aktivmaterial 34, der Binder 36 um das Leitadditiv 38 getrennt in die Maschine 42 eingefüllt. Bei einer Weiterbildung hiervon erfolgt das Einfüllen des Leitadditivs 38 nach der Vermischung des Aktivmaterials 34 mit dem Binder 36 und somit nach deren Homogenisierung. Insbesondere wird dabei das Leitadditiv 38 In Längsrichtung 44 nach dem ersten Mahlwerk 60 oder am Anfang des zweiten Bereich 54 eingefüllt.

Bei dem Verfahren 30 zur Herstellung der Elektrode 16 wird nachfolgend die Elektrodenpulvermischung 28 auf den jeweiligen Ableiter 24 aufgebracht. Da die Elektrodenpulvermischung 28 fließfähig ist, erfolgt dies mittels Gießens in den Kalanderspalt eines 4-Walzen-Kalenders. Mittels eines Kalandrierprozesses 72, bei dem der 4-Walzen-Kalender verwendet wird, wird eine Kraft und Scherung auf die Elektrodenpulvermischung 28 in Richtung des jeweiligen Ableiter 24 ausgeübt und die Elektrodenpulverschicht 28 erhitzt. Infolgedessen wird der jeweilige Binder 36 aktiviert und aus der Elektrodenpulvermischung 28 die jeweilige Schicht 26 erstellt.

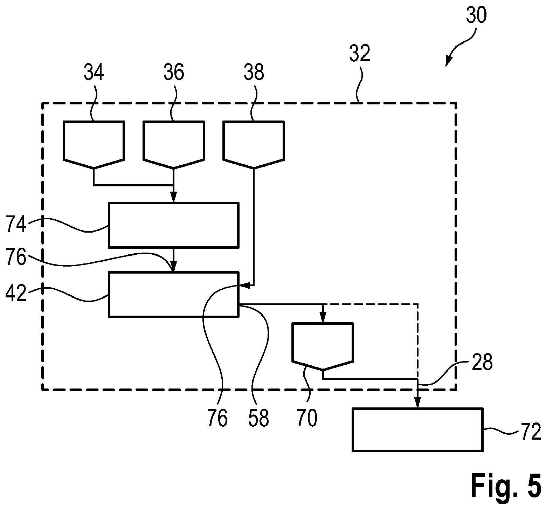

In Figur 5 ist eine alternative Ausführungsform des Verfahrens 30 zur Herstellung der Elektrode 16 dargestellt, wobei lediglich das Verfahren 32 zur Herstellung der Elektrodenpulvermischung 28 abgewandelt ist. Der Kalandrierprozess 72 hingegen ist nicht verändert. Es wird jedoch das Aktivmaterial 34 und der Binder 36 zunächst mittels einer Ultrazentrifugalmühle 74 vorgemischt, wobei die einzelnen Bestandteile teilweise zermahlen werden. Erst im Anschluss daran werden diese in die Maschine 42 eingefüllt. Hierbei ist beispielsweise wiederum lediglich der den Einfüllbereich 40 bildende Trichter vorhanden. Es ist jedoch auch möglich, dass die Maschine zwei zueinander beabstandete Einfüllöffnungen 76 aufweist, die zusammen den Einfüllbereich 40 bilden. Dabei wird in eine der Einfüllöffnungen 76 das mit in dem Binder 36 vorgemischte Aktivmaterial 34 eingefüllt. In die verbleibende Einfüllöffnungen 76 wird das Leitadditiv 38 eingefüllt. Aufgrund dieses Vorgehens wird eine Desagglomeration verhindert, und die Homogenität des ersten Pulver 66 ist erhöht. Wie auch bei der vorhergehenden Ausführungsform ist, das Silo 70 vorhanden, oder es ist auch möglich, dieses wegzulassen oder nicht zu verwenden, sodass die aus der Entnahmeöffnung 58 entnommene Elektrodenpulvermischung 28, die auch als Elektroden-Blend bezeichnet wird, direkt dem Kalandrierprozess 72 zugeführt wird.

Die Erfindung ist nicht auf die vorstehend beschriebenen Ausführungsbeispiel beschränkt. Vielmehr können auch andere Varianten der Erfindung von dem Fachmann hieraus abgeleitet werden, ohne den Gegenstand der Erfindung zu verlassen. Insbesondere sind ferner alle im Zusammenhang mit den einzelnen Ausführungsbeispielen beschriebene Einzelmerkmale auch auf andere Weise miteinander kombinierbar, ohne den Gegenstand der Erfindung zu verlassen.

### Bezugszeichenliste

- 2: Kraftfahrzeug
- 4: Rad
- 6: Antrieb
- 8: Energiespeicher
- 10: Schnittstelle
- 12: Gehäuse
- 14: Batteriezelle
- 16: Elektrode
- 18: Separator
- 20: Anode
- 22: Kathode
- 24: Ableiter
- 26: Schicht
- 28: Elektrodenpulvermischung
- 30: Verfahren zur Herstellung einer Elektrode
- 32: Verfahren zur Herstellung einer Elektrodenpulvermischung
- 34: Aktivmaterial
- 36: Binder
- 38: Leitadditiv
- 40: Einfüllbereich
- 42: Maschine
- 44: Längsrichtung
- 46: Antrieb
- 48: Schnecke
- 50: zweite Schnecke
- 52: erster Bereich
- 54: zweiter Bereich
- 56: dritter Bereich
- 58: Entnahmeöffnung
- 60: erstes Mahlwerk
- 62: Knetwerk
- 64: zweites Mahlwerk
- 66: erstes Pulver
- 68: zweites Pulver
- 70: Silo
- 72: Kalandrierprozess
- 74: Ultrazentrifugalmühle
- 76: Einfüllöffnung

## Patentansprüche

1. Verfahren (32) zur Herstellung einer Elektrodenpulvermischung (28) einer Batteriezelle (14), bei welchem
- in einen Einfüllbereich (40) einer Maschine (42), die eine angetriebene, sich in einer Längsrichtung (44) erstreckende Schnecke (48) zur Durchmischung und Förderung eines Pulvers in der Längsrichtung (44) aufweist, ein Aktivmaterial (34), ein Binder (36) und ein Leitadditiv (38) eingefüllt werden,
- mittels der Schnecke (48) der Binder (36), das Aktivmaterial (34) und das Leitadditiv (38) zu einem ersten Pulver (66) vermischt werden,
- mittels der Schnecke (48) aus dem ersten Pulver (66) ein zweites Pulver (68) erstellt wird, indem der Binder (36) fibrilliert wird,
- mittels der Schnecke (48) aus dem zweiten Pulver (68) die Elektrodenpulvermischung (28) erstellt wird, indem der fibrillierte Binder (38) zerkleinert wird,
- die Elektrodenpulvermischung (28) an einer Entnahmeöffnung (58) aus der Maschine (42) entnommen wird, wobei die Entnahmeöffnung (58) in Längsrichtung (44) zu dem Einfüllbereich (40) beabstandet ist.

2. Verfahren (32) nach Anspruch 1, **dadurch gekennzeichnet, dass** als Binder (36) PTFE herangezogen wird.

3. Verfahren (32) nach Anspruch 1 oder 2, **dadurch gekennzeichnet, dass** das Aktivmaterial (34) und der Binder (36) vor dem Einfüllen in die Maschine (42) vorgemischt werden.

4. Verfahren (32) nach einem der Ansprüche 1 bis 3, **dadurch gekennzeichnet, dass** die Elektrodenpulvermischung (28) in ein Silo (70) gefüllt wird.

5. Verfahren (32) nach einem der Ansprüche 1 bis 4, **dadurch gekennzeichnet, dass** eine Maschine (42) mit einer sich in der Längsrichtung (44) erstreckende zweiten Schnecke (50) verwendet wird, die in die Schnecke (48) eingreift.

6. Verfahren (32) nach Anspruch 5, **dadurch gekennzeichnet, dass** als Maschine (42) ein Doppelschneckenextruder verwendet wird.

7. Verwendung einer Maschine (42), die eine angetriebene, sich in einer Längsrichtung (44) erstreckende Schnecke (48) zur Durchmischung und Förderung eines Pulvers in der Längsrichtung (44) aufweist, zur Herstellung einer Elektrodenpulvermischung (28) einer Batteriezelle (14).

8. Verfahren (30) zur Herstellung einer Elektrode (16) einer Batteriezelle (14), bei welchem eine Elektrodenpulvermischung (28) gemäß einem Verfahren (32) nach einem der Ansprüche 1 bis 6 hergestellt und die Elektrodenpulvermischung (28) auf einen Ableiter (24) aufgebracht wird.
